# EUROPEAN PATENT APPLICATION

(11) **EP 4 848 060 A1**
(43) Date of publication of application: **02.12.2026**
(21) Application number: 26180219.3
(22) Date of filing: 21.05.2026
(51) Int. Cl.: G06F 3/04886, G06F 9/451, H04N 1/00

(54) **ELECTRONIC DEVICE AND DISPLAY CONTROL METHOD CAPABLE OF DISPLAYING VIRTUAL KEYBOARD CORRESPONDING TO COMBINATION OF CHARACTER STRING INPUT FIELD SPECIFIED BY USER AND DISPLAY LANGUAGE**

(30) Priority: 26.05.2025 JP 2025087041
(71) Applicant: KYOCERA Document Solutions Inc., Osaka-shi, Osaka 540-8585 (JP)
(72) Inventor: Miyai, Toshiya, Osaka-shi, 540-8585 (JP); Saratani, Ken, Osaka-shi, 540-8585 (JP); Nakanishi, Shinichi, Osaka-shi, 540-8585 (JP); Konishi, Kohei, Osaka-shi, 540-8585 (JP); Ishikawa, Suguru, Osaka-shi, 540-8585 (JP)
(74) Representative: Plougmann Vingtoft a/s

(57) **Abstract**

An electronic device includes an operation display portion, a setting processing portion, a first display processing portion, and a second display processing portion. The setting processing portion sets a display language to be displayed on the operation display portion. The first display processing portion causes a character string input field used for inputting character strings to be displayed on the operation display portion. The second display processing portion, in response to a specification operation that specifies the character string input field, causes the operation display portion to display any one of one or more virtual keyboards corresponding to a combination of the character string input field specified by the specification operation and the display language at the time of the specification operation.

## Description

### BACKGROUND

The present disclosure relates to an electronic device and a display control method.

Electronic devices such as a multifunction peripheral are equipped with an operation display portion, such as an operation panel, used for operation input. In addition, a printing device is known that displays, in response to a specification operation that specifies a character string input field displayed on the operation display portion, a virtual keyboard corresponding to a specified character string input field on the operation display portion.

### SUMMARY

An electronic device according to one aspect of the present disclosure includes an operation display portion, a setting processing portion, a first display processing portion, and a second display processing portion. The setting processing portion sets a display language to be displayed on the operation display portion. The first display processing portion causes a character string input field used for inputting character strings to be displayed on the operation display portion. The second display processing portion, in response to a specification operation that specifies the character string input field, causes the operation display portion to display any one of one or more virtual keyboards corresponding to a combination of the character string input field specified by the specification operation and the display language at the time of the specification operation.

A display control method according to another aspect of the present disclosure is executed by an electronic device that includes an operation display portion. The display control method includes a setting step, a first display step, and a second display step. In the setting step, a display language to be displayed on the operation display portion is set. In the first display step, a character string input field used for inputting a character string is displayed on the operation display portion. In the second display step, in response to a specification operation that specifies the character string input field, causes the operation display portion to display any one of one or more virtual keyboards corresponding to a combination of the character string input field specified by the specification operation and the display language at the time of the specification operation.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a block diagram showing a system configuration of an image forming apparatus of a first embodiment according to the present disclosure.
FIG. 2 shows an example of table data used in an image forming apparatus of a first embodiment according to the present disclosure.
FIG. 3 is a flowchart showing an example of a display control process executed by an image forming apparatus of a first embodiment according to the present disclosure.
FIG. 4 shows an example of an input screen displayed in an image forming apparatus of a first embodiment according to the present disclosure.
FIG. 5 shows an example of a virtual keyboard displayed by an image forming apparatus of a first embodiment according to the present disclosure.
FIG. 6 is a block diagram showing a system configuration of an image forming apparatus of a second embodiment according to the present disclosure.
FIG. 7 is a block diagram showing a system configuration of an image forming apparatus of a third embodiment according to the present disclosure.
FIG. 8 is a block diagram showing a system configuration of an image forming apparatus of a fourth embodiment according to the present disclosure.

### DETAILED DESCRIPTION

Hereinafter, embodiments according to the present disclosure will be described with reference to the drawings. Note that the following embodiments are examples of specific embodiments according the present disclosure, and do not limit the technical scope of the present disclosure.

### [First Embodiment]

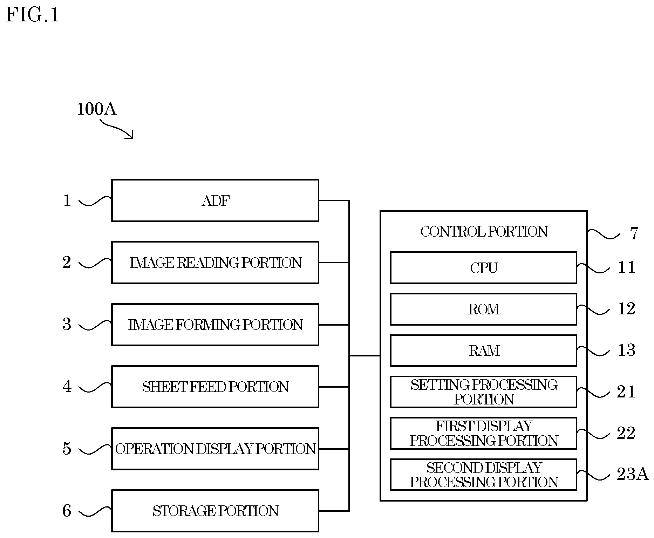

First, with reference to FIG. 1, a configuration of an image forming apparatus 100A of a first embodiment according to the present disclosure will be described.

The image forming apparatus 100A is a multifunction peripheral that has a plurality of functions, such as a scanning function for reading images from a document, a printing function for forming images on sheets based on image data, a fax function, and a copy function. The image forming apparatus 100A is an example of an electronic device according to the present disclosure. Note that the present disclosure may be applied to electronic devices such as scanners, printers, fax machines, copy machines, televisions, microwave ovens, washing machines, and refrigerators.

As shown in FIG. 1, the image forming apparatus 100A includes an auto document feeder (ADF) 1, an image reading portion 2, an image forming portion 3, a sheet feed portion 4, an operation display portion 5, a storage portion 6, and a control portion 7.

The ADF 1 conveys a document whose image is to be read by the image reading portion 2. The ADF 1 includes a document setting portion, a plurality of conveying rollers, a document holder, and a sheet discharge portion.

The image reading portion 2 achieves the scanning function. The image reading portion 2 includes a document table, a light source, a plurality of mirrors, an optical lens, and a charge coupled device (CCD). The image reading portion 2 reads an image from a document conveyed by the ADF 1 and outputs image data including the read image. In addition, the image reading portion 2 also reads an image from a document placed on the document table and outputs image data including the read image.

The image forming portion 3 achieves the printing function. More specifically, the image forming portion 3 forms an image on a sheet supplied by a sheet feed portion 4 in accordance with an electrophotographic method. For example, the image forming portion 3 includes a plurality of image forming units, an optical scanning device, an intermediate transfer belt, a secondary transfer roller, a fixing device, and a sheet discharge tray. Note that the image forming portion 3 may also form an image on the sheet supplied by the sheet feed portion 4 using another image forming method, such as an inkjet method.

The sheet feed portion 4 supplies sheets to the image forming portion 3. The sheet feed portion 4 includes a sheet feed cassette and a plurality of conveying rollers.

The operation display portion 5 is a user interface for the image forming apparatus 100A. The operation display portion 5 includes a display portion and an operation portion. The display portion displays various types of information in response to control instructions from the control portion 7. More specifically, the display portion is a display device such as a liquid crystal display. The operation portion inputs various types of information to the control portion 7 in response to user operations. More specifically, the operating portion is an operation device that includes operation keys and a touch panel.

The storage portion 6 is a non-volatile storage device. For example, the storage portion 6 is a non-volatile memory such as flash memory. Note that the storage portion 6 may also be a solid state drive (SSD) or a hard disk drive (HDD).

The control portion 7 performs overall control of the image forming apparatus 100A. As shown in FIG. 1, the control portion 7 includes a CPU 11, a ROM 12, and a RAM 13. The CPU 11 is a processor that executes various types of arithmetic processing. The ROM 12 is a non-volatile storage device that stores in advance information such as control programs for causing the CPU 11 to execute various types of processes. The RAM 13 is a volatile or non-volatile storage device used as a temporary storage memory (work area) for various types of processes executed by the CPU 11. In the control portion 7, various types of control programs stored in advance in the ROM 12 are executed by the CPU 11. Thus, the control portion 7 performs overall control of the image forming apparatus 100A.

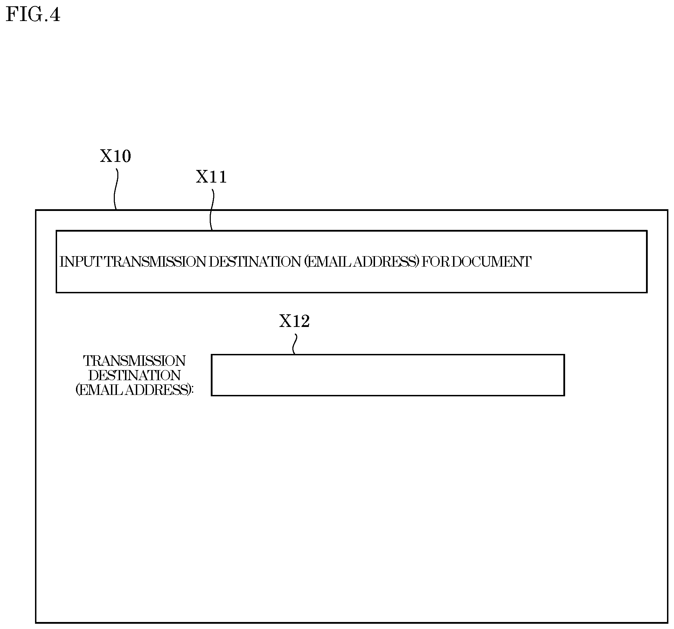

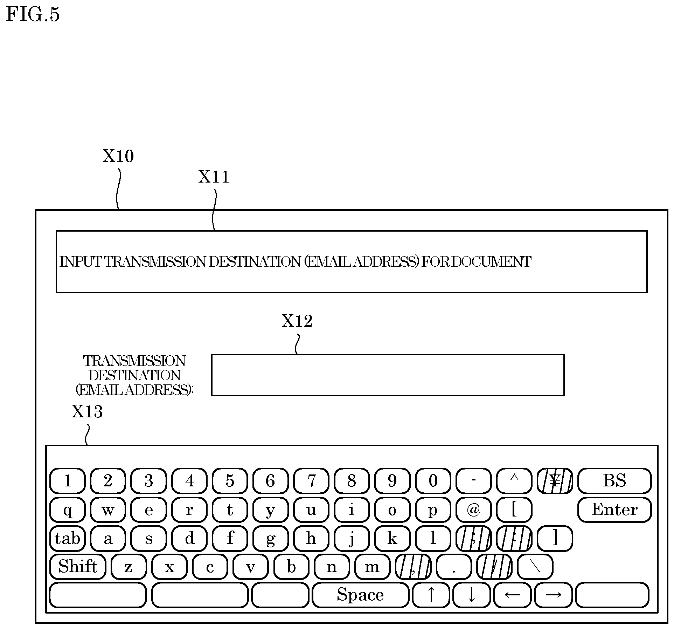

A printing device is known that, in response to a specification operation that specifies a character string input field X12 (see FIG. 4) displayed on the operation display portion 5, displays a virtual keyboard (software keyboard) X13 (see FIG. 5) corresponding to the specified character string input field X12 on the operation display portion 5.

Here, in electronic devices such as the printing device described above, the display language shown on the operation display portion 5 may be changed. When the display language is changed, the types of characters entered into the character string input field X12 may change. Therefore, it is desirable that the electronic device displays a virtual keyboard X13 corresponding to the combination of the specified character string input field X12 and the display language at that time, in response to the specification operation. However, conventionally, there has been no configuration that can display a virtual keyboard X13 corresponding to a combination of a character string input field X12 specified by the user and the display language.

However, the image forming apparatus 100A of a first embodiment according to the present disclosure can display a virtual keyboard X13 corresponding to a combination of a character string input field X12 specified by the user and the display language, as described below.

### [Configuration of Control Portion 7]

Next, the configuration of the control portion 7 will be described with reference to FIGS. 1, 2, 4, and 5.

As shown in FIG. 1, the control portion 7 includes a setting processing portion 21, a first display processing portion 22, and a second display processing portion 23A.

More specifically, in the image forming apparatus 100A, a display control program for causing the control portion 7 to function as the above-mentioned processing portions is pre-stored in the ROM 12. The CPU 11 of the control portion 7 functions as the respective processing portions shown in FIG. 1 by executing the display control program.

Note that some or all of the processing portions included in the control portion 7 may be composed of electronic circuits. In addition, the display control program may be a program that causes a plurality of processors to function as the processing portions shown in FIG. 1.

The setting processing portion 21 sets the display language to be displayed on the operation display portion 5.

More specifically, the image forming apparatus 100A can be set to either "Japanese" or "English" as the display language.

For example, the setting processing portion 21 displays a display language setting screen used for setting the display language on the operation display portion 5 in response to a predetermined user operation on the operation display portion 5. The display language setting screen allows the user to set the display language to either "Japanese" or "English". The setting processing portion 21 sets the display language according to a user operation on the display language setting screen.

Note that the languages that can be set as the display language in the image forming apparatus 100A are not limited to "Japanese" and "English," but may also include "German", "French", "Italian", and "Chinese" and the like.

The first display processing portion 22 displays a character string input field X12 (see FIG. 4) used for inputting a character string on the operation display portion 5.

For example, the image forming apparatus 100A receives a character string such as an email address, a document name, and a password. In addition, in the image forming apparatus 100A, character string input fields X12 such as an email address input field used for entering an email address, a document name input field used for entering a document name, and a password input field used for entering a password are displayed on the operation display portion 5. Note that character strings input to the image forming apparatus 100A are not limited to email addresses, document names, and passwords. Moreover, the character string input field X12 displayed on the operation display portion 5 in the image forming apparatus 100A is not limited to the email address input field, the document name input field, and the password input field.

When the operation display portion 5 receives an operation from a user instructing the display of an input screen X10 (see FIG. 4) that includes one or more character string input fields X12, the first display processing portion 22 displays the input screen X10 that the user has instructed to display on the operation display portion 5.

For example, in the image forming apparatus 100A, input screens X10, including an email address input screen with an email address input field, a document name input screen with a document name input field, and a password input screen with a password input field, are displayed on the operation display portion 5. Note that the input screen X10 displayed on the operation display portion 5 in the image forming apparatus 100A is not limited to the email address input screen, the document name input screen, and the password input screen.

FIG. 4 shows an example of the input screen X10 displayed on the operation display portion 5. More specifically, FIG. 4 shows the email address input screen displayed on the operation display portion 5. Note that FIG. 4 shows the email address input screen when the display language is set to "Japanese".

The input screen X10 shown in FIG. 4 includes a message display field X11 and a character string input field X12. The message display field X11 shows a message for the user.

The second display processing portion 23A, in response to the specification operation that specifies the character string input field X12, displays any one of one or more virtual keyboards X13 (see FIG. 5) on the operation display portion 5 that correspond to the combination of the character string input field X12 specified by the specification operation and the display language at the time of the specification operation.

More specifically, the second display processing portion 23A displays on the operation display portion 5 one of the plurality of virtual keyboards X13 (see FIG. 5) that correspond to the combination of the character string input field X12 specified by the specification operation and the display language at the time of the specification operation, which is set in advance as the virtual keyboard X13 to be displayed initially.

For example, the specification operation is a touch operation on the character string input field X12 displayed on the operation display portion 5.

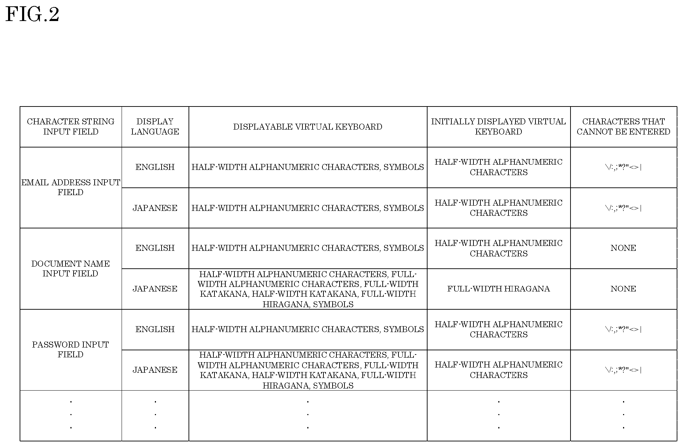

For example, in the image forming apparatus 100A, table data DA10 (see FIG. 2) showing a correspondence between the combination of the character string input field X12, the display language, and one or more virtual keyboards X13 is stored in advance in the storage portion 6.

FIG. 2 shows an example of table data DA10 stored in the storage portion 6. In the table data DA10 shown in FIG. 2, a displayable virtual keyboard X13, an initially displayed virtual keyboard X13, and characters that cannot be entered are defined for each combination of character string input field X12 and the display language.

For example, in the table data DA10 shown in FIG. 2, the displayable virtual keyboard X13 corresponding to the combination of the email address input field (character string input field X12) and "English" (the display language) is a virtual keyboard X13 for "half-width alphanumeric characters" and a virtual keyboard X13 for "symbols". The "half-width alphanumeric characters" virtual keyboard X13 is a virtual keyboard used for inputting half-width alphanumeric characters, which are a type of characters. In addition, the "symbols" virtual keyboard X13 is a virtual keyboard X13 used for inputting symbols, which are a type of characters. Note that the image forming apparatus 100A displays virtual keyboards X13 for "half-width alphanumeric characters" and "symbols", as well as virtual keyboards X13 for "full-width alphanumeric characters", "full-width katakana", "half-width katakana", "full-width hiragana", and a numeric keypad.

In addition, in the table data DA10 shown in FIG. 2, the virtual keyboard X13 that is initially displayed corresponding to the combination of the email address input field (character string input field X12) and "English" (the display language) is a virtual keyboard X13 for "half-width alphanumeric characters".

Furthermore, in the table data DA10 shown in FIG. 2, the characters that cannot be entered corresponding to the combination of the email address input field (character string input field X12) and "English" (the display language) are "¥", "/", ":", ",", ";", "*", "?", """, "<", **">", and** "|".

For example, when the specification operation is received on the input screen X10, the second display processing portion 23A uses the table data DA10 to identify one or more displayable virtual keyboards X13 that correspond to the combination of the character string input field X12 specified by the specification operation and the current display language.

Then, when a displayable virtual keyboard X13 is identified, the second display processing portion 23A displays the identified virtual keyboard X13 on the input screen X10.

In addition, when a plurality of displayable virtual keyboards X13 are identified, the second display processing portion 23A displays one of the plurality of identified displayable virtual keyboards X13 on the input screen X10, that is set as the virtual keyboard X13 to be initially displayed in the table data DA10.

Moreover, the second display processing portion 23A displays the operation keys included in the displayed virtual keyboard X13 as inoperable for each character that has been set in the table data DA10 as a character that cannot be entered.

Moreover, in a case in which there are a plurality of virtual keyboards X13 corresponding to the combination of the character string input field X12 specified by the specification operation and the display language at the time of the specification operation, the second display processing portion 23A switches the virtual keyboard X13 displayed on the input screen X10 within the range of the plurality of virtual keyboards X13 corresponding to the combination, in accordance with a predetermined display switching operation received on the input screen X10.

FIG. 5 shows an example of a virtual keyboard X13 that is displayed on the operation display portion 5 when the specification operation for specifying the character string input field X12 on the input screen X10 shown in FIG. 4 is received. More specifically, FIG. 5 shows the "half-width alphanumeric characters " virtual keyboard X13 displayed on the operation display portion 5. Note that in FIG. 5, hatching is applied to the operation keys that correspond to characters that cannot be entered, among the operation keys included in the "half-width alphanumeric characters " virtual keyboard X13.

Note that the virtual keyboard X13 that is initially displayed in the table data DA10, corresponding to each combination of the character string input field X12 and the display language, may be arbitrarily set according to the user operation on the operation display portion 5.

### [Display Control Process]

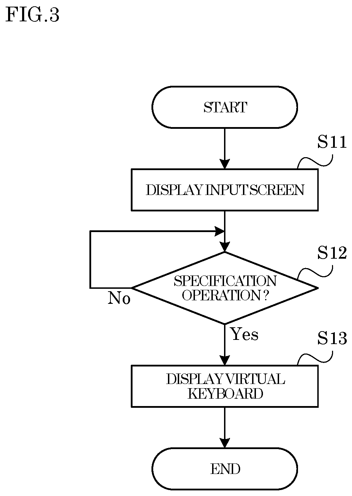

Next, with reference to FIG. 3, a display control method according to the present disclosure will be described along with an example of a procedure for display control process executed by the control portion 7 in the image forming apparatus 100A. Here, steps S11, S12, and so on represent numbers of processing procedures (steps) executed by the control portion 7.

The display control process is executed when the operation display portion 5 receives an operation from a user instructing the display of an input screen X10 (see FIG. 4) that includes one or more character string input fields X12.

Note that in the image forming apparatus 100A, the display language can be set at any desired timing. The process of setting the display language is an example of setting steps according to the present disclosure and is executed by the setting processing portion 21 of the control portion 7.

### <Step S11>

First, in step S11, the control portion 7 displays the input screen X10, which has been instructed to be displayed by the user operation, on the operation display portion 5. The processing in step S11 is an example of the first display step according to the present disclosure and is executed by the first display processing portion 22 of the control portion 7.

### <Step S12>

In step S12, the control portion 7 determines whether the specification operation to specify the character string input field X12 on the input screen X10 has been received.

Here, when the control portion 7 determines that the specification operation has been received (YES side of S12), processing proceeds to step S13. In addition, in a case in which the specification operation has not been received (NO side of S12), the control portion 7 waits for the specification operation to be received in step S12.

### <Step S13>

In step S13, the control portion 7 displays any one of the one or more virtual keyboards X13 (see FIG. 5) on the operation display portion 5 that correspond to the combination of the character string input field X12 specified by the specification operation and the display language at the time of the specification operation. The processing in step S13 is an example of a second display step according to the present disclosure and is executed by the second display processing portion 23A of the control portion 7.

More specifically, the control portion 7 uses the table data DA10 to identify one or more displayable virtual keyboards X13 that correspond to the combination of the character string input field X12 specified by the specification operation and the current display language. The control portion 7 displays on the input screen X10 one of the one or more displayable virtual keyboards X13 that has been identified and set as the virtual keyboard X13 to be initially displayed in the table data DA10. In addition, of the operation keys that are included in the displayed virtual keyboard X13, the control portion 7 displays the operation keys that correspond to characters that have been set in the table data DA10 as characters that cannot be entered as inoperable characters. Moreover, in a case in which there are a plurality of virtual keyboards X13 corresponding to the combination of the character string input field X12 specified by the specification operation and the display language at the time of the specification operation, the control portion 7 switches the virtual keyboard X13 displayed on the input screen X10 within the range of the plurality of virtual keyboards X13 corresponding to that combination, in response to the display switching operation received on the input screen X10.

In this way, in the image forming apparatus 100A, a virtual keyboard X13 corresponding to each combination of the character string input field X12 and the display language is predetermined. Thus, it is possible to display a virtual keyboard X13 corresponding to the combination of the character string input field X12 specified by the user and the display language.

### [Second Embodiment]

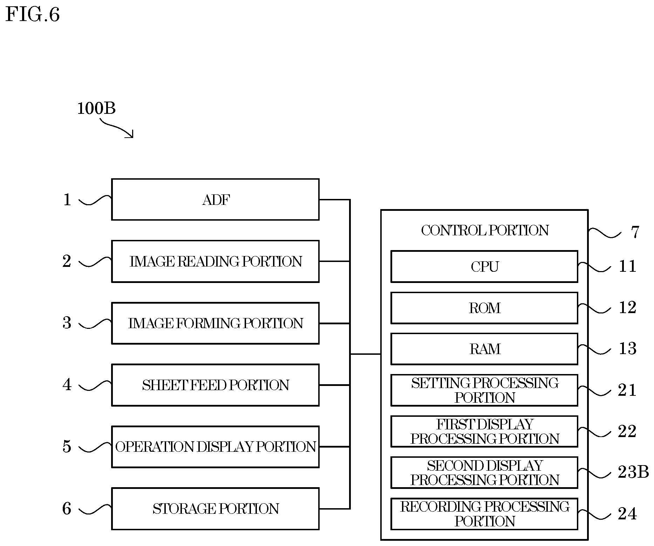

Next, with reference to FIG. 6, a configuration of an image forming apparatus 100B of a second embodiment according to the present disclosure will be described.

As shown in FIG. 1 and FIG. 6, the image forming apparatus 100B differs from the image forming apparatus 100A in that the image forming apparatus 100B includes a second display processing portion 23B and a recording processing portion 24 instead of the second display processing portion 23A. Note that other aspects are common to both the image forming apparatus 100A and the image forming apparatus 100B.

The recording processing portion 24 records the last used virtual keyboard X13 for each combination of the character string input field X12 and the display language.

For example, in the image forming apparatus 100B, a history data storage area corresponding to each combination of the character string input field X12 and the display language is provided in advance in the storage portion 6. The history data storage area stores history data indicating the last used virtual keyboard X13.

For example, when character input in the character string input field X12 is completed, the recording processing portion 24 stores history data indicating the virtual keyboard X13 that was last used for character input in the history data storage area corresponding to the combination of that character string input field X12 and the current display language.

Note that when character input in the character string input field X12 is completed, the recording processing portion 24 may store the history data indicating the last displayed virtual keyboard X13 in the history data storage area corresponding to the combination of that character string input field X12 and the current display language.

The second display processing portion 23B, in response to the specification operation that specifies the character string input field X12, causes the operation display portion 5 to display any one of one or more virtual keyboards X13 (see FIG. 5) that correspond to the combination of the character string input field X12 specified by the specification operation and the display language at the time of the specification operation.

More specifically, the second display processing portion 23B, on the operation display portion 5, displays the last used virtual keyboard X13 from among a plurality of virtual keyboards X13 corresponding to the combination of the character string input field X12 specified by the specification operation and the display language at the time of the specification operation.

For example, in a case in which the specification operation is received on the input screen X10, the second display processing portion 23B uses the table data DA10 to identify one or more displayable virtual keyboards X13 that correspond to the combination of the character string input field X12 specified by the specification operation and the current display language.

In a case in which a displayable virtual keyboard X13 is identified, the second display processing portion 23B displays the identified virtual keyboard X13 on the input screen X10.

In addition, when a plurality of displayable virtual keyboards X13 are identified, the second display processing portion 23B identifies the last used virtual keyboard X13 based on the history data stored in the history data storage area corresponding to the combination of the character string input field X12 specified by the specification operation and the current display language. The second display processing portion 23B displays on the input screen X10, the last used virtual keyboard X13 that has been identified.

In addition, the second display processing portion 23B displays the operation keys included in the displayed virtual keyboard X13 as inoperable for each character that has been set in the table data DA10 as a character that cannot be entered.

In addition, in a case in which there are a plurality of virtual keyboards X13 corresponding to the combination of the character string input field X12 specified by the specification operation and the display language at the time of the specification operation, the second display processing portion 23B switches the virtual keyboard X13 displayed on the input screen X10 within the range of the plurality of virtual keyboards X13 corresponding to the combination, in response to the display switching operation received on the input screen X10.

Thus, in the image forming apparatus 100B, in a case in which there are a plurality of virtual keyboards X13 corresponding to the combination of the character string input field X12 specified by the specification operation and the display language at the time of the specification operation, the virtual keyboard X13 to be initially displayed is determined based on the recorded result of the last used virtual keyboard X13 corresponding to that combination. Thus, it is easier to initially display a frequently used virtual keyboard X13, thereby improving user convenience.

Note that the image forming apparatus 100B may also include the second display processing portion 23A in addition to the second display processing portion 23B. In this case, the control portion 7 only needs to perform a setting to enable the function of either the second display processing portion 23B or the second display processing portion 23A, depending on a user operation on the operation display portion 5.

### [Third Embodiment]

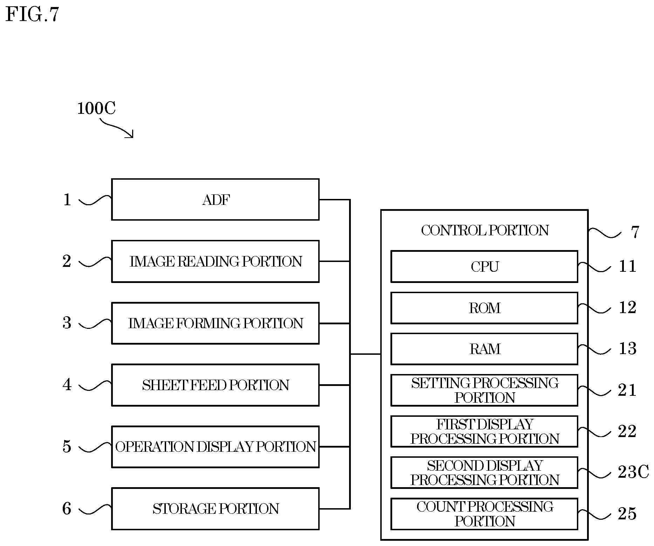

Next, with reference to FIG. 7, a configuration of an image forming apparatus 100C of a third embodiment according to the present disclosure will be described.

As shown in FIGS. 1 and 7, the image forming apparatus 100C differs from the image forming apparatus 100A in that the image forming apparatus 100C includes a second display processing portion 23C and a count processing portion 25 instead of the second display processing portion 23A. Note that other aspects are common to both the image forming apparatus 100A and the image forming apparatus 100C.

A count processing portion 25 counts the number of times each virtual keyboard X13 corresponding to each combination of the character string input field X12 and the display language is used for each that combination.

For example, in the image forming apparatus 100C, a count data storage area corresponding to each combination of the character string input field X12 and the display language is provided in advance in the storage portion 6. The count data storage area stores count data indicating the number of times each virtual keyboard X13 corresponding to the combination of the character string input field X12 and the display language has been used.

For example, each time a character is entered in the character string input field X12, the count processing portion 25 updates count data in the count data storage area corresponding to the combination of the character string input field X12 and the current display language so as to count up the number of times the virtual keyboard X13 used for character input has been used.

Note that the count processing portion 25 may update the count data so that the number of times the virtual keyboard X13 is used is incremented each time the virtual keyboard X13 is displayed. In addition, the count processing portion 25 may update the count data so that when character input in the character string input field X12 is completed, the number of times each virtual keyboard X13 was used to input one or more characters while the character string input field X12 was displayed is counted up.

The second display processing portion 23C, in response to the specification operation that specifies the character string input field X12, causes the operation display portion 5 to display any one of one or more virtual keyboards X13 (see FIG. 5) that correspond to the combination of the character string input field X12 specified by the specification operation and the display language at the time of the specification operation.

More specifically, the second display processing portion 23C displays, on the operation display portion 5, the virtual keyboard X13 that is used most frequently among a plurality of virtual keyboards X13 corresponding to the combination of the character string input field X12 specified by the specification operation and the display language at the time of the specification operation.

For example, in a case in which the specification operation is received on the input screen X10, the second display processing portion 23C uses the table data DA10 to identify one or more displayable virtual keyboards X13 that correspond to the combination of the character string input field X12 specified by the specification operation and the current display language.

When a single displayable virtual keyboard X13 is identified, the second display processing portion 23C displays the identified virtual keyboard X13 on the input screen X10.

In addition, when a plurality of displayable virtual keyboards X13 are identified, the second display processing portion 23C identifies the virtual keyboard X13 that has been used the most, based on the count data stored in the count data storage area corresponding to the combination of the character string input field X12 specified by the specification operation and the current display language. The second display processing portion 23C displays the virtual keyboard X13, which has been identified as having the most usage history, on the input screen X10.

In addition, the second display processing portion 23C displays the operation keys included in the displayed virtual keyboard X13 as inoperable for each character that has been set in the table data DA10 as a character that cannot be entered.

Moreover, in a case in which there are a plurality of virtual keyboards X13 corresponding to the combination of the character string input field X12 specified by the specification operation and the display language at the time of the specification operation, the second display processing portion 23C switches the virtual keyboard X13 displayed on the input screen X10 within the range of the plurality of virtual keyboards X13 corresponding to the combination, in response to the display switching operation received on the input screen X10.

Thus, in the image forming apparatus 100C, in a case in which there are a plurality of virtual keyboards X13 corresponding to the combination of the character string input field X12 specified by the specification operation and the display language at the time of the specification operation, the virtual keyboard X13 that is initially displayed is determined based on the count result of the number of times each virtual keyboard X13 corresponding to that combination has been used. Thus, it is possible to display the frequently used virtual keyboard X13 by default. Therefore, it is possible to improve user convenience.

Note that the image forming apparatus 100C may also include the second display processing portion 23A in addition to the second display processing portion 23C. In this case, the control portion 7 only needs to perform a setting to enable the function of either the second display processing portion 23C or the second display processing portion 23A, depending on a user operation on the operation display portion 5.

In addition, the image forming apparatus 100C may also include the second display processing portion 23B and the recording processing portion 24 in addition to the second display processing portion 23C. In this case, the control portion 7 only needs to enable the function of either the second display processing portion 23C or the second display processing portion 23B in response to the user operation on the operation display portion 5.

Moreover, the image forming apparatus 100C may also include the second display processing portion 23A, the second display processing portion 23B, and the recording processing portion 24, in addition to the second display processing portion 23C. In this case, the control portion 7 only needs to enable one of the functions among the second display processing portion 23C, the second display processing portion 23A, and the second display processing portion 23B in response to a user operation on the operation display portion 5.

### [Fourth Embodiment]

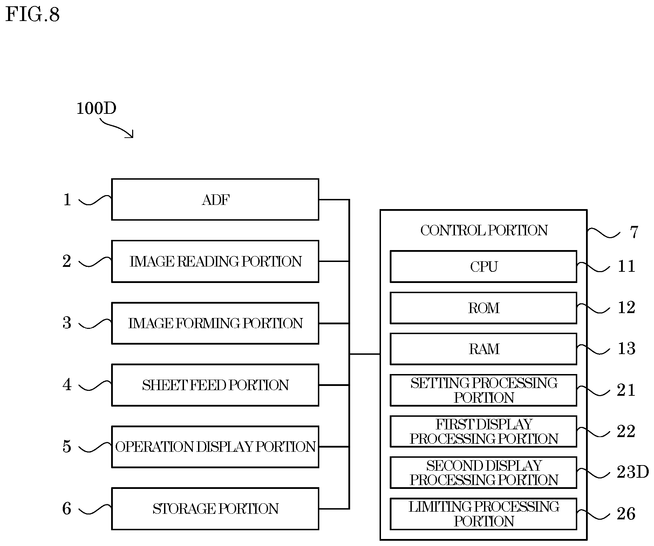

Next, with reference to FIG. 8, a configuration of an image forming apparatus 100D of a fourth embodiment according to the present disclosure will be described.

As shown in FIGS. 1 and 8, the image forming apparatus 100D differs from the image forming apparatus 100A in that it includes a second display processing portion 23D and a limiting processing portion 26 instead of the second display processing portion 23A. Note that other aspects are common to both the image forming apparatus 100A and the image forming apparatus 100D.

The limiting processing portion 26 limits the types of characters that make up a password entered into the image forming apparatus 100D according to a predetermined limiting operation.

For example, the limiting processing portion 26 displays a password policy setting screen on the operation display portion 5 in response to a predetermined user operation on the operation display portion 5. The password policy setting screen allows setting of conditions that the password entered into the image forming apparatus 100D must meet. In the image forming apparatus 100D, the input of a password that does not meet the conditions is prohibited. The conditions include a requirement that the entered password does not include any of predetermined types of characters. In addition, the conditions include a requirement that the number of characters in the entered password is equal to or greater than a predetermined minimum value. Moreover, the conditions include a requirement that the entered password includes a predetermined number of different characters. One example of such a limiting operation is specifying types of characters that cannot be included in the password to be entered on the password policy setting screen (limiting the types of characters that make up the password to be entered).

The second display processing portion 23D, in response to the specification operation that specifies the character string input field X12, causes the operation display portion 5 to display any one of one or more virtual keyboards X13 (see FIG. 5) that correspond to the combination of the character string input field X12 specified by the specification operation and the display language at the time of the specification operation.

More specifically, in a case in which the character string input field X12 specified by the specification operation is not the password input field used for entering a password, the second display processing portion 23D displays on the operation display portion 5 one of the plurality of virtual keyboards X13 that correspond to the combination of the character string input field X12 specified by the specification operation and the display language at the time of the specification operation, and which has been set as the virtual keyboard X13 to be displayed initially.

In addition, in a case in which the character string input field X12 specified by the specification operation is the password input field used for entering a password, the second display processing portion 23D displays on the operation display portion 5 one of the remaining virtual keyboards X13 that correspond to the combination of the password input field and the display language at the time of the specification operation, after excluding the virtual keyboard X13 that corresponds to the types of characters that cannot be used to form a password.

For example, in a case in which the specification operation is received on the input screen X10, the second display processing portion 23D uses the table data DA10 to identify one or more displayable virtual keyboards X13 that correspond to the combination of the character string input field X12 specified by the specification operation and the current display language.

Then, when a displayable virtual keyboard X13 is identified, the second display processing portion 23D displays the identified virtual keyboard X13 on the input screen X10.

In addition, in a case in which the character string input field X12 specified by the specification operation is not the password input field, and a plurality of displayable virtual keyboards X13 are identified, the second display processing portion 23D displays, on the input screen X10, one of the identified plurality of displayable virtual keyboards X13 that is set in the table data DA10 as the virtual keyboard X13 to be initially displayed.

Moreover, in a case in which the character string input field X12 specified by the specification operation is the password input field, and a plurality of displayable virtual keyboards X13 are identified, the second display processing portion 23D displays, on the operation display portion 5, one of the remaining virtual keyboards X13, randomly selected from the identified virtual keyboards X13, excluding the virtual keyboard X13 that corresponds to types of characters that cannot be used to form a password.

Furthermore, the second display processing portion 23D displays operation keys included in the displayed virtual keyboard X13 as inoperable for each character that has been set in the table data DA10 as a character that cannot be entered.

In addition, in a case in which there are a plurality of virtual keyboards X13 corresponding to the combination of the character string input field X12 specified by the specification operation and the display language at the time of the specification operation, the second display processing portion 23D switches the virtual keyboard X13 displayed on the input screen X10 within the range of the plurality of virtual keyboards X13 corresponding to the combination, in response to the display switching operation received on the input screen X10.

In this way, in the image forming apparatus 100D, in a case in which the character string input field X12 specified by the specification operation is the password input field, and there are a plurality of virtual keyboards X13 corresponding to the combination of the password input field and the display language at the time of the specification operation, then one of the remaining virtual keyboards X13, excluding the virtual keyboards X13 corresponding to the types of characters that cannot be used to form a password, is randomly selected from among the plurality of virtual keyboards X13 corresponding to that combination and displayed on the operation display portion 5. Thus, it is possible to prevent the display of a virtual keyboard X13 that corresponds to character types that cannot be used to create a password. In addition, it is possible to prevent a third party from eavesdropping on password input and guessing the password content from the virtual keyboard X13 that is initially displayed.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An electronic device (100), comprising:
an operation display portion (5);
a setting processing portion (21) configured to set a display language displayed on the operation display portion (5);
a first display processing portion (22) configured to display a character string input field (X12) used for inputting character strings on the operation display portion (5); and
a second display processing portion (23) configured to, in response to a specification operation that specifies the character string input field (X12), cause the operation display portion (5) to display any one of one or more virtual keyboards (X13) corresponding to a combination of the character string input field (X12) specified by the specification operation and the display language at the time of the specification operation.

2. The electronic device (100) according to claim 1, further comprising
a recording processing portion (24) configured to record the last used virtual keyboard (X13) for each combination of the character string input field (X12) and the display language; wherein
the second display processing portion (23) causes the operation display portion (5) to display the last used virtual keyboard (X13) among a plurality of virtual keyboards (X13) corresponding to the combination of the character string input field (X12) specified by the specification operation and the display language at the time of the specification operation.

3. The electronic device (100) according to claim 1 or 2, further comprising
a counting processing portion (25) configured to count a number of times each of the virtual keyboards (X13) corresponding to each combination of the character string input field (X12) and the display language is used for each that combination; wherein
the second display processing portion (23) causes the operation display portion (5) to display the virtual keyboard (X13) that is most frequently used among a plurality of virtual keyboards (X13) corresponding to the combination of the character string input field (X12) specified by the specification operation and the display language at the time of the specification operation.

4. The electronic device (100) according to any one of claim 1 to 3, wherein
the second display processing portion (23), when the character string input field (X12) specified by the specification operation is a password input field used for entering a password, causes one virtual keyboard (X13) randomly selected from among the plurality of virtual keyboards (X13) corresponding to the combination of the password input field and the display language at the time of the specification operation to be displayed on the operation display portion (5).

5. The electronic device (100) according to any one of claim 1 to 4, further comprising
a limiting processing portion (26) configured to limit types of characters that make up the password entered into the electronic device (100) according to a predetermined limiting operation; wherein
the second display processing portion (23), when the character string input field (X12) specified by the specification operation is a password input field used for entering the password, causes the operation display portion (5) to display one virtual keyboard (X13) from among the plurality of virtual keyboards (X13) corresponding to the combination of the password input field and the display language at the time of the specification operation, excluding a virtual keyboard (X13) corresponding to types of characters that cannot be used to form the password.

6. The electronic device (100) according to any one of claim 1 to 5, further comprising
one or both of an image reading portion (2) configured to read an image from a document, and an image forming portion (3) configured to form an image on a sheet.

7. A display control method performed on an electronic device (100) that comprises an operation display portion (5), the display control method comprising:
a setting step of setting a display language displayed on the operation display portion (5);
a first display step of displaying a character string input field (X12) used for inputting character strings on the operation display portion (5); and
a second display step of, in response to a specification operation that specifies the character string input field (X12), causing the operation display portion (5) to display any one of one or more virtual keyboards (X13) corresponding to a combination of the character string input field (X12) specified by the specification operation and the display language at the time of the specification operation.
